# EUROPÄISCHE PATENTANMELDUNG

(11) **EP 4 332 753 A2**
(43) Veröffentlichungstag der Anmeldung: **06.03.2024**
(21) Anmeldenummer: 23188126.9
(22) Anmeldetag: 27.07.2023
(51) Int. Cl.: G06F 8/35

(54) **VERFAHREN ZUM MODIFIZIEREN EINER SIGNALVERARBEITUNGSKETTE**

(30) Priorität: 11.08.2022 DE 102022120339
(71) Anmelder: dSPACE GmbH, 33102 Paderborn (DE)
(72) Erfinder: Niere, Jörg, 33102 Paderborn (DE)

(57) **Zusammenfassung**

In einem Verfahren zur Verwaltung von Komponenten grafischer Diagramme in einer Plattform zur Verarbeitung von Signalen mehrerer Sensoren kann mindestens eine Komponente in einem ersten Modus, z. B. Rapid Control Prototyping, vorhanden sein und in einem zweiten Modus, z. B. Quellcodeerzeugung, fehlen. Darüber hinaus können Komponenten, die nur von der abwesenden Komponente verwendet werden, im zweiten Modus auch gelöscht werden. Die Informationen über die Komponenten können in einem Konfigurationsprofil gespeichert werden.

## Beschreibung

Die Erfindung betrifft die Verarbeitung von Sensordaten anhand einer in einem Blockdiagramm angegebenen Verschaltung von mindestens zwei Komponenten.

Steuergeräte werden in einer Vielzahl von Anwendungen eingesetzt, um physikalische Größen eines Prozesses zu erfassen und/oder mittels angeschlossener Aktuatoren auf einen Prozess einzuwirken. Die das dynamische Verhalten des Prozesses bestimmenden Zeitkonstanten bedingen häufig Zykluszeiten von 1 ms oder kürzer, so dass in der Regel eine Echtzeitfähigkeit des Steuergeräts erforderlich ist, insbesondere innerhalb einer vorgegebenen maximalen Latenz auf geänderte Sensorwerte reagiert werden muss. Für eine Fahrerassistenzfunktion in einem Kraftfahrzeug müssen dabei in der Regel die Daten von einer Vielzahl verschiedener Sensoren zusammengeführt werden, wie insbesondere Umfeldsensoren wie Kameras, Radar- und/oder LIDAR-Sensoren.

Um den Entwurf von Steuergeräten zu beschleunigen, werden Kontrollstrategien häufig mit Hilfe von Entwicklungsumgebungen implementiert, welche die Verschaltung der Sensoren in einem Blockdiagramm spezifizieren. Die einzelnen Blöcke bzw. Komponenten ermöglichen die Einbindung von Code in verschiedenen Programmiersprachen. Daneben gibt es häufig vorgefertigte Komponenten, die beispielsweise Treiber zur Ansteuerung unterschiedlicher Sensortypen umfassen. Das Blockdiagramm kann in einer Laufzeitumgebung ausgeführt werden, welche eine zeitliche Synchronisierung der Datenströme bereitstellt. Ein Beispiel für eine solche Entwicklungsumgebung ist RTMaps von Intempora.

Die Entwicklung einer Multisensorapplikation kann in einem ersten Schritt auf einem Host-PC erfolgen, indem z.B. über USB eine Kamera angebunden wird oder die Daten eines GPS-Empfängers über eine serielle Schnittstelle empfangen werden. Hierbei werden häufig andere Sensoren als im Serienfahrzeug verwendet. Zusätzlich können speziell für die Verwendung auf einem Host-PC entwickelte Komponenten wie Bildanzeigen, flexible Datenanzeigen oder auch Oszilloskope eingesetzt werden. Wenn kein Sensor vorhanden ist, können stattdessen Abspielkomponenten verwendet werden, die gespeicherte Sensordaten einspeisen. Auch eine Speicherung von empfangenen Sensordaten in einer Aufzeichnungskomponente ist möglich.

In einem zweiten Schritt wird die Multisensorapplikation in der Regel per Rapid-Control Prototyping (RCP) getestet, also in einer realen Umgebung auf einem RCP-System bzw. einem für die Entwicklung geeigneten besonders leistungsstarken Steuergerät eingesetzt. Hierfür kann die Entwicklungsumgebung verschiedene Laufzeitumgebungen zur Verfügung stellen, die auf das jeweilige RCP-System optimiert sind. Eine Aufzeichnung oder das Abspielen von Daten können häufig durch eine in der Komponente vorhandene Abstraktion der Betriebssystemschnittstelle beibehalten werden. Das Blockdiagramm kann weitgehend weiterverwendet werden, aber einige Komponenten müssen manuell ersetzt bzw. entfernt werden: So kann das Kamerabild weiterhin über einen USB-Port kommen, wobei allerdings eine andere Kamera verwendet wird. Auch kann es vorkommen, dass der GPS-Empfänger jetzt über einen CAN-Bus oder Automotive Ethernet Bus angebunden ist. Daneben können ein oder mehrere Sensoren in dem RCP-System integriert sein und andere Treiber erfordern. Anzeigekomponenten sind auf dem RCP-System überflüssig bzw. werden nicht unterstützt.

Bei einem Wechsel der Hardwareplattform muss nach dem Stand der Technik jeweils das Blockdiagramm manuell angepasst werden. Wenn die Entwicklung z.B. wegen aufgetretener Fehler einen mehrfachen Wechsel zwischen Host-PC und RCP-System erfordert, müssen die Änderungen wiederholt vorgenommen werden.

Vor diesem Hintergrund ist es eine Aufgabe der vorliegenden Erfindung, den Stand der Technik weiterzuentwickeln und insbesondere eine Anpassung der im Blockdiagramm spezifizierten Signalverarbeitungskette an verschiedene Hardwareplattformen zu vereinfachen.

Diese Aufgabe wird durch ein Verfahren zum Erzeugen von Quellcode nach Anspruch 1, ein Computerprogrammprodukt nach Anspruch 9 und ein Computersystem nach Anspruch 10 gelöst. Vorteilhafte Weiterbildungen sind Gegenstand der abhängigen Unteransprüche.

Es wird also ein computerimplementiertes Verfahren zum Modifizieren einer Signalverarbeitungskette bereitgestellt, welche in einem Blockdiagramm über mit Signallinien verbundene Komponenten implementiert ist, wobei das Blockdiagramm mindestens eine Signalquelle und mindestens zwei Komponenten umfasst, die direkt oder über zwischengeschaltete Komponenten mit mindestens einer der Signalquellen verbunden sind.

Das Verfahren umfasst die Schritte
- Einlesen des Blockdiagramms in einer Entwicklungsumgebung,
- Auswahl eines Modus aus zumindest zwei vorhandenen Modi, wobei in einem ersten Modus die Signalverarbeitung auf einer ersten Hardwareplattform erfolgt und in einem zweiten Modus die Signalverarbeitung auf einer zweiten Hardwareplattform erfolgt, wobei die erste Hardwareplattform und die zweite Hardwareplattform unterschiedlich ausgestaltet sind, und
- Entfernen oder Ersetzen mindestens einer ersten Komponente aus dem Blockdiagramm, wenn der zweite Modus gewählt wurde.

Die erste Hardwareplattform kann insbesondere ein Host-PC sein, der vorzugsweise mit einer Anzeige und Bedienelementen ausgestattet ist; die zweite Hardware-Plattform kann insbesondere ein RCP-System sein. Bei dem RCP-System kann es sich um ein Prototypen-Steuergerät aber auch um ein Serien-Steuergerät handeln.

In einer bevorzugten Ausführungsform der Erfindung umfasst das Verfahren weiterhin das Entfernen mindestens einer weiteren Komponente, wenn die erste Komponente entfernt wurde und die weitere Komponente ausgangsseitig ausschließlich mit der ersten Komponente verbunden war. Wenn der oder die Ausgänge einer weiteren Komponente nicht weiterverwendet werden, so kann auch diese entfallen. Indem dies automatisiert erfolgt, wird das Anpassen der Blockdiagramme weiter beschleunigt. Es kann vorgesehen sein, die Analyse zur Identifikation der zu entfernenden Komponenten einmal durchzuführen und das Ergebnis in einer Konfigurationsdatei zu hinterlegen. Eine erneute Analyse muss dann erst nach einem manuellen Editieren des Blockdiagramms erfolgen.

Besonders bevorzugt erfolgt ein iteratives Entfernen von nicht mehr benötigten Komponenten. So kann zunächst überprüft werden, ob im letzten Schritt eine Komponente entfernt wurde, und anschließend die verbleibenden Komponenten auf unverbundene Ausgänge überprüft werden. Wird dabei festgestellt, dass sämtliche Ausgänge einer nunmehr verwaisten Komponente nicht verbunden sind, so kann die verwaiste Komponente entfernt werden. In einem nächsten Schritt kann überprüft werden, ob das Entfernen der verwaisten Komponente dazu geführt hat, dass eine neue Komponente verwaist ist, weil sämtliche Ausgänge nicht verbunden sind. Diese Überprüfung kann fortgesetzt werden, bis keine Komponente mit unverbundenen Ausgängen mehr gefunden und entfernt wurde - dann kann es auch keine Komponenten geben, die wegen unverbundener Ausgänge nicht mehr benötigt werden.

Vorzugsweise erfolgt die Auswahl eines Modus automatisch anhand einer Hardwareplattform, welche eine Laufzeitumgebung der Entwicklungsumgebung ausführt. Die Hardwareplattform kann beispielsweise anhand eines Prozessortyps oder einer eindeutigen Prozessor-Identifikationsnummer ermittelt werden. Alternativ oder ergänzend kann die Hardwareplattform anhand eines oder mehrerer angeschlossener Geräte, insbesondere eines, mehrerer oder aller angeschlossenen Sensoren identifiziert werden. Es kann auch vorgesehen sein, eine Checksumme aus den Serien- und/oder Modellnummern von auf der Hardwareplattform vorhandenen Geräten als Hardware-ID zu berechnen und insbesondere mit einem im Profil hinterlegten Wert zu vergleichen. Die Laufzeitumgebung kann eine Funktion zur Auswahl des Modus und/oder Identifikation der Hardwareumgebung in einer Anwendungsprogrammierungsschnittstelle (API) bereitstellen.

Es ist vorteilhaft, wenn ein dritter Modus über die Entwicklungsumgebung ausgewählt werden kann, wobei der dritte Modus eine Ausführung auf einer dritten Hardwareplattform, insbesondere einem Seriensteuergerät, umfasst, und wobei im dritten Modus zusätzlich eine Erzeugung von Quellcode aus dem Blockdiagramm erfolgt. In dem dritten Modus kann es vorgesehen sein, dass die Signalverarbeitungskette auf einer Hardwareplattform ausgeführt wird, ohne eine Laufzeitumgebung zu verwenden. Der Nutzer kann diesen Modus auswählen, um eine Erzeugung von Quellcode zu starten. Der generierte Quellcode kann mit einem Cross-Compiler für dritte Hardwareplattform kompiliert werden. Die erzeugte Binärdatei kann beispielsweise auf dem nichtflüchtigen Flash-Speicher eines Seriensteuergeräts hinterlegt werden.

Bevorzugt umfasst das Verfahren ein Einlesen einer Konfigurationsdatei, wobei die Konfigurationsdatei zumindest eine Abbildung einer Komponente des Blockdiagramms auf eine andere Komponente oder eine Abbildung auf leere Komponente, d.h. ein Entfernen der Komponente, umfasst, und wobei die zumindest eine Abbildung spezifisch für einen Modus ist. Dies ermöglicht es dem Nutzer, die vorzunehmenden Änderungen einmal als Konfigurationsdatei zu speichern und anschließend beliebig häufig durchführen zu lassen. Bis eine Komponente gewechselt wird und/oder Änderungen an der Hardwareplattform auftreten bzw. erforderlich werden, braucht die Konfigurationsdatei nicht geändert zu werden. Indem mehrere Konfigurationsdateien gespeichert werden, können eine Vielzahl von Modi bzw. Hardwareplattformen unterstützt werden. Vorzugsweise wird dabei eine Konfigurationsdatei pro Modus gespeichert; prinzipiell ist es aber auch möglich, alle Modi in einer Konfigurationsdatei mit mehreren Abschnitten zu hinterlegen.

Vorzugsweise umfasst die Entwicklungsumgebung eine Laufzeitumgebung, welche dazu eingerichtet ist, über eine Signalquelle empfangene Signaldaten mit mindestens einem Zeitstempel zu versehen, und wobei die Komponenten und/oder die Laufzeitumgebung dazu eingerichtet sind, Signaldaten synchronisiert zu verarbeiten. Die Laufzeitumgebung kann einen festen Funktionsumfang zur Synchronisation der Signale bereitstellen, der auf allen Hardwareplattformen gleichbleibt.

In einer bevorzugten Ausführungsform der Erfindung erfolgt das Modifizieren einer Signalverarbeitungskette automatisch im Rahmen eines Tests. Es wird also ein Verfahren zum Testen eines Steuergeräts mit folgenden Schritten bereitgestellt:
Öffnen eines Blockdiagramms auf einer ersten Hardwareplattform, insbesondere einem Host-PC, wobei in dem Blockdiagramm zumindest eine erste Signalquelle als Abspielkomponente ausgeführt ist,
Ausführen des Blockdiagramms auf der ersten Hardwareplattform, um mindestens ein erstes Ergebnis zu erhalten,
Vergleichen des ersten Ergebnisses mit einer Testbedingung, und wenn die erste Testbedingung erfüllt ist,
Auslesen einer Konfigurationsdatei, welche eine Abbildung der ersten Signalquelle auf eine Komponente zum Ansteuern eines realen Sensors umfasst,
Anpassen des Blockdiagramms anhand der Konfigurationsdatei, wobei das Anpassen des Blockdiagramms das Ersetzen der Abspielkomponente durch die Komponente zum Ansteuern eines realen Sensors umfasst,
Herunterladen des modifizierten Blockdiagramms auf eine zweite Hardwareplattform, insbesondere ein RCP-System,
Ausführen des Blockdiagramms auf der zweiten Hardwareplattform, um ein Ergebnis basierend auf realen Sensordaten zu erhalten.

Durch das erfindungsgemäße Verfahren wird ein nahtloser Übergang zwischen einem Data Replay Test eines Kontrollalgorithmus und einer Erprobung unter realen Bedingungen möglich.

Die Erfindung betrifft ferner ein Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Erzeugen eines Quellcodes mit einem erfindungsgemäßen Verfahren,
b. Kompilieren des Quellcodes für die Recheneinheit, so dass ein ausführbarer Code erzeugt wird,
c. Übertragen des ausführbaren Codes auf das Steuergerät, und
d. Hinterlegen des ausführbaren Codes auf einem nichtflüchtigen Speicher des Steuergeräts und/oder Ausführen des ausführbaren Codes durch die Recheneinheit des Steuergeräts.

Ferner betrifft die Erfindung ein Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein erfindungsgemäßes Verfahren auszuführen.

Weiterhin betrifft die Erfindung ein Computersystem umfassend eine Mensch-Maschine-Schnittstelle, einen nichtflüchtigen Speicher und einen Prozessor, wobei der Prozessor dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine beispielhafte Ausführung eines Computersystems,
- Figur 2: eine schematische Darstellung einer Entwicklungsumgebung,
- Figur 3: ein erstes Beispiel eines Blockdiagramms für die Verarbeitung von Sensordaten,
- Figur 4: ein zweites Beispiel eines Blockdiagramms für die Verarbeitung von Sensordaten, und
- Figur 5: ein drittes Beispiel eines Blockdiagramms für die Verarbeitung von Sensordaten.

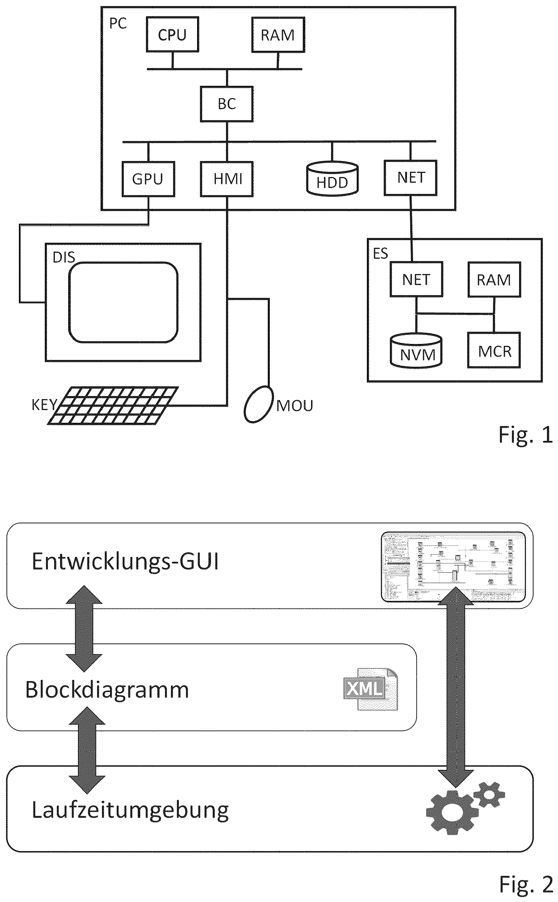

Figur 1 zeigt eine beispielhafte Ausführung eines Computersystems umfassend einen Host-PC PC und ein Steuergerät ES. Der Host-PC PC weist einen Prozessor CPU, der insbesondere als Mehrkernprozessor realisiert sein kann, einen Arbeitsspeicher RAM und einen Buscontroller BC auf. Der Host-PC ist dazu ausgelegt, von einem Nutzer direkt manuell bedient zu werden, wobei vorzugsweise über eine Grafikkarte GPU ein Monitor DIS und über eine Peripherieschnittstelle HMI eine Tastatur KEY und eine Maus MOU angeschlossen sind. Prinzipiell könnte die Mensch-Maschine-Schnittstelle des Host-PC auch als Touch-Interface ausgebildet sein. Der Host-PC umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET kann ein Steuergerät ES angeschlossen sein. Prinzipiell können ein oder mehrere beliebige Schnittstellen, insbesondere drahtgebundene Schnittstellen, an dem Computersystem PC vorhanden und jeweils für die Verbindung mit einem Steuergerät ES einsetzbar sein. Zweckmäßigerweise kann eine Netzwerkschnittstelle nach dem Ethernet-Standard verwendet werden; die Schnittstelle NET kann auch drahtlos ausgeführt sein, wie insbesondere als WLAN-Schnittstelle oder nach einem Standard wie Bluetooth.

Das Steuergerät ES kann beispielsweise als RCP-System, als ein Seriensteuergerät oder als Evaluierungsboard für eine Target-Plattform ausgeführt sein. Zweckmäßigerweise umfasst es eine Schnittstelle NET zur Verbindung mit dem Computersystem PC, einen Mikrocontroller MCR mit einer von dem Prozessor des Computersystems abweichenden Architektur, einen Arbeitsspeicher RAM und einen nichtflüchtigen Speicher NVM. Das Steuergerät ES muss nicht dauerhaft mit dem Host-PC verbunden sein, vielmehr kann es auch vorgesehen sein, dass beispielsweise das Aufzeichnen nur mittels des Steuergeräts ES erfolgt; später kann dann eine Verbindung mit dem Host-PC erfolgen, um die Daten zu kopieren. Alternativ kann als zusätzlicher Bestandteil des Computersystems auch ein lediglich über Netzwerk verbundener Server vorgesehen, der beispielsweise eine für größere Datenmengen geeignete Speicherkapazität aufweist.

In Figur 2 ist eine Entwicklungsumgebung schematisch dargestellt. Die Entwicklungsumgebung umfasst ein Entwicklungs-GUI, also eine Benutzeroberfläche, in der Blockdiagramme dargestellt und bearbeitet werden können.

In einem Blockdiagramm, welches insbesondere als XML-Datei abgespeichert werden kann, ist die Verschaltung verschiedener Komponenten mit den vorhandenen Sensoren angegeben. Die Signalverarbeitungskette ist also mittels mehrerer Komponenten in dem Blockdiagramm implementiert. Die einzelnen Komponenten können als kompilierte Binärdateien in der jeweiligen Komponente eingebunden sein, so dass eine Implementierung in verschiedenen Programmiersprachen erfolgen kann. Die Signalverarbeitungskette ist daher unabhängig von Details der Implementierung einzelner Komponenten.

Das Blockdiagramm wird eingelesen und einer Laufzeitumgebung ausgeführt, welche die Sensordaten mit Zeitstempeln versehen und zeitlich synchronisiert weiterleiten kann.

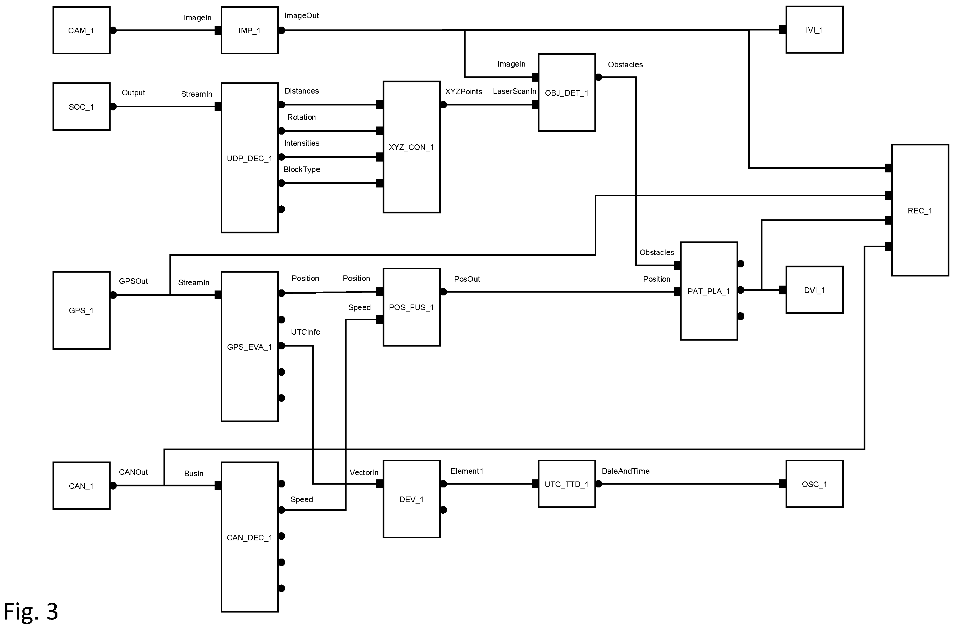

Figur 3 zeigt ein erstes Beispiel eines Blockdiagramms für die Verarbeitung von Sensordaten, bei dem auf der linken Seite mehrere Quellen von Sensordaten dargestellt sind, in der Mitte mehrere Verarbeitungskomponenten, und auf der rechten Seite Komponenten für das Darstellen und Speichern von Sensordaten.

Eine Komponente CAM_1 zum Ansteuern einer Kamera liefert Bilder, die einem Eingang ImageIn einer Bildverarbeitungskomponente IMP_1 zugeführt werden. Die Bildverarbeitungskomponente IMP_1 kann beispielsweise die Helligkeit eines Bilds anhand eines Histogramms anpassen oder verschiedene Computer-Vision-Algorithmen auf das Bild anwenden. Der Ausgang ImageOut der Bildverarbeitungskomponente ist mit einer Darstellungskomponente IVI_1 verbunden, welche das Bild für einen Benutzer darstellt.

Über einen Socket SOC_1 werden Daten eines LIDAR-Sensors empfangen und dem Eingang StreamIn einer Decoderkomponente UDP_DEC_1 zugeführt. Diese gibt über einen Ausgang Distances Entfernungen, über einen Ausgang Rotation Rotationswinkel, zusammen also Polarkoordinaten, über einen Ausgang Intensities die Intensitäten von Messpunkten und über einen Ausgang BlockType weitere Informationen an eine Komponente XYZ_CON_1 weiter. Die Komponente XYZ_CON_1 erstellt anhand der Polarkoordinaten und Intensitäten Messpunkte in kartesischen Koordinaten bzw. konvertiert die LIDAR-Punktwolke in kartesische Koordinaten und gibt sie über den Ausgang XYZPoints an eine Objekt-Detektor-Komponente OBJ_DET_1 weiter.

Eine Komponente GPS_1 zur Ansteuerung eines Satellitennavigations-Empfängers gibt über einen Ausgang GPSOut GPS-Daten an den Eingang StreamIn einer Auswertungskomponente GPS_EVA_1 weiter. Die Auswertungskomponente GPS_EVA_1 ermittelt aus den GPS-Daten eine aktuelle Position, Zeitinformationen und optional weitere Informationen. Die aktuelle Position wird über einen Ausgang Position einer Komponente POS_FUS_1 zugeführt. Die Zeitinformationen werden über einen Ausgang UTCInfo dem Eingang VectorIn einer Komponente DEV_1 zugeführt.

Eine Komponente CAN_1 zum Auslesen der Daten eines CAN-Bus gibt über einen Ausgang CANOut empfangene Datenpakete an den Eingang BusIn einer Decoderkomponente CAN_DEC_1 weiter. Die Decoderkomponente CAN_DEC_1 kann verschiedene auf dem CAN-Bus übertragene Informationen wie beispielsweise eine aktuelle Geschwindigkeit aus den Datenpaketen extrahieren. Die aktuelle Geschwindigkeit wird über einen Ausgang Speed der Komponente POS_FUS_1 zugeführt.

Die Objekt-Detektor-Komponente OBJ_DET_1 wertet die empfangene LIDAR-Punktwolke aus, um darin enthaltene Objekte zu erkennen. Die erkannten Objekte werden über einen Ausgang Obstacles an eine Planungskomponente PAT_PLA_1 weitergegeben. Die Komponente POS_FUS_1 fügt die aktuelle Geschwindigkeit und die aktuelle Position zusammen und gibt das Ergebnis über den Ausgang PosOut an die Planungskomponente PAT_PLA_1 weiter. Die Planungskomponente PAT_PLA_1 ermittelt aus den Hindernissen und der Position eine Trajektorie, anhand der beispielsweise Aktoren eines autonomen Fahrzeugs angesteuert werden können. Gemäß der im Blockdiagramm implementierten Signalverarbeitungskette werden die erhaltenen Daten aber einer Aufnahmekomponente REC_1 zugeführt und zusätzlich mittels einer Darstellungskomponente DVI_1 für einen Nutzer auf einem Bildschirm dargestellt.

Die Komponente DEV_1 teilt die als Vektor empfangenen Zeitinformationen auf und gibt über einen Ausgang Element1 die aktuelle Zeit an eine Konvertierungskomponente UTC_TTD_1 weiter. Die Konvertierungskomponente UTC_TTD_1 wandelt die aktuelle Zeit in ein übliches Darstellungsformat, wie Datum und Uhrzeit um, bevor sie diese über den Ausgang DateAndTime an eine Darstellungskomponente OSC_1 weitergibt; die Darstellungskomponente stellt sie auf einem Bildschirm dar.

Das Ausgangssignal ImageOut der Bildverarbeitungskomponente IMP_1, das Ausgangssignal GPSOut der Komponente GPS_1 sowie das Ausgangssignal CANOut der Komponente CAN_1 werden zusätzlich der Aufnahmekomponente REC_1 zugeführt. Die Aufnahmekomponente REC_1 kann somit die von den verschiedenen Sensoren empfangenen Signale in roher oder vorverarbeiteter Form zu einer späteren Auswertung - oder aber einem einfachen Abspielen - auf einem nichtflüchtigen Datenträger, wie einer Solid State Disk oder einer Festplatte speichern.

Das in Figur 3 dargestellte Blockdiagramm ist beispielsweise für die Verwendung mit einem Host-PC geeignet, auf dem erste Entwicklungsschritte stattfinden, wobei auch eine gleichzeitige Ansicht der aufgenommenen Daten erwünscht ist.

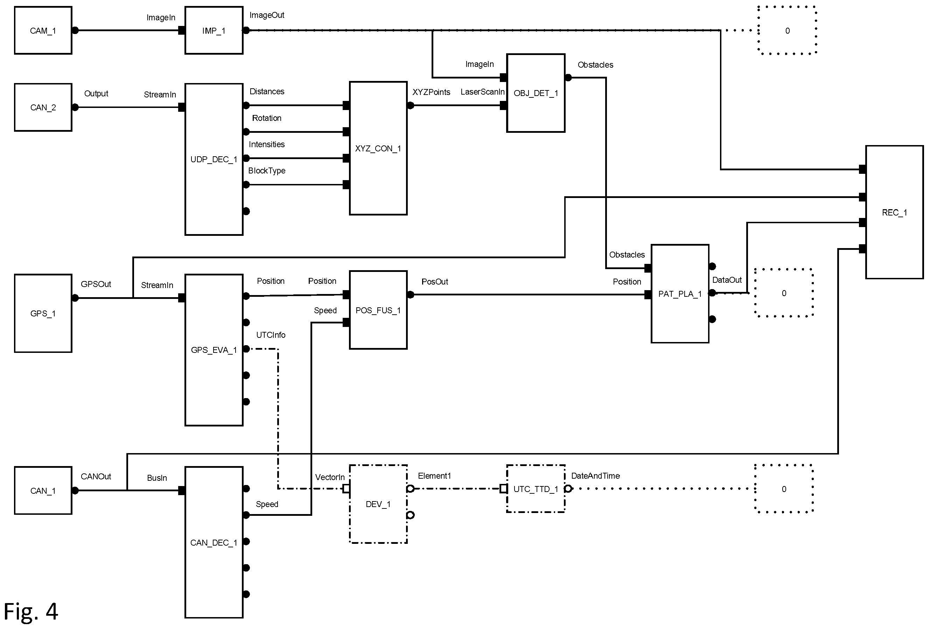

Figur 4 zeigt ein zweites Beispiel eines Blockdiagramms für die Verarbeitung von Sensordaten, bei dem auf der linken Seite mehrere Quellen von Sensordaten dargestellt sind, und welches mehrere Verarbeitungskomponenten umfasst. Das Blockdiagramm entspricht in weiten Teilen dem ersten Beispiel eines Blockdiagramms, so dass im Folgenden primär die Unterschiede erläutert werden sollen.

Ausgehend von den Eingangskomponenten wie CAM_1 werden die Signale wieder Verarbeitungskomponenten wie IMP_1 zugeführt. Es fehlen aber die Darstellungskomponenten IVI_1, DVI_1 und OSC_1, was vorliegend durch ein gepunktetes Kästchen 0 angedeutet wird. Das Ausgangssignal von IMP_1 sowie das Ausgangssignal von PAT_PLA_1 werden somit nur der Aufnahmekomponente REC_1 zugeführt.

Bei der fehlenden Darstellungskomponente OSC_1 gibt es darüber hinaus eine Konvertierungskomponente, deren Ausgang ausschließlich mit dem Eingang von OSC_1 verbunden war, und zwar UTC TTD_1, die vorliegend strichpunktiert angedeutet ist. Somit wird Konvertierungskomponente UTC_TTD_1 nicht mehr benötigt und kann automatisch entfernt werden. Nach der Entfernung von UTC_TTD_1 gibt es darüber hinaus mit DEV_1 eine weitere Komponente, die ausgangsseitig ausschließlich mit einer entfernten bzw. nicht mehr benötigten Komponente verbunden ist. Somit wird auch Komponente DEV_1 nicht mehr benötigt und kann entfernt werden, was vorliegend mit einer strichpunktierten Darstellung angedeutet ist. Der Eingang von DEV_1 war mit Auswertungskomponente GPS_EVA_1 verbunden, die ausgangsseitig auch mit Komponente POS_FUS_1 verbunden ist und daher weiterhin benötigt wird.

Das in Figur 4 dargestellte Blockdiagramm für die Verarbeitung von Sensordaten ist beispielsweise für die Verwendung in einem RCP-System geeignet, welches insbesondere keine Komponenten für Benutzerinteraktion wie einen Bildschirm aufweist.

Ausgehend von dem Blockdiagramm in Figur 3 kann das in Listing 1 angegebene Profil für die Anpassung des Blockdiagramms zu dem in Figur 4 dargestellten verwendet werden.

Listing 1:
IVI_1 : = 0;
DVI_1 : = 0;
OSC_1 : = 0;

Mit dem Bezeichner ": = 0" ist hierbei eine Abbildung auf eine leere Komponente bzw. das Entfernen der jeweiligen Komponente gemeint. Die Komponenten UTC_TTD_1 und DEV_1 können automatisiert entfernt werden. Es kann aber auch vorgesehen sein, dass in einem Analyseschritt die transitiv entfernbaren Komponenten ermittelt und ebenfalls im Profil für die Anpassung aufgeführt werden. Das Profil kann in Form einer Konfigurationsdatei, wie einer XML-Datei oder einer komma-separierten Liste, auf dem Host-PC oder in einem Versionsverwaltungssystem hinterlegt werden.

Neben den dargestellten Änderungen kann es auch vorgesehen sein, dass eine Komponente wie beispielsweise die Eingangskomponente CAM_1 aufgrund der Verwendung eines anderen Kameratyps ausgetauscht werden (nicht in der Figur gezeigt). Dann kann das Profil von Listing 1 um eine Zeile wie die Folgende ergänzt werden:
CAM_1 := CAM_X;

Hier wird eine Ersetzung über den Bezeichner ":=" mit einer Angabe der einzufügenden Komponente spezifiziert. Der verwendete Bezeichner ist lediglich beispielhaft, die Syntax des Profils kann beliebig vordefiniert werden. Auch der Austausch weiterer Eingangskomponenten und/oder einer Verarbeitungs- bzw. Konvertierungskomponente kann vorgesehen sein und über einen entsprechenden Eintrag im Profil angegeben werden.

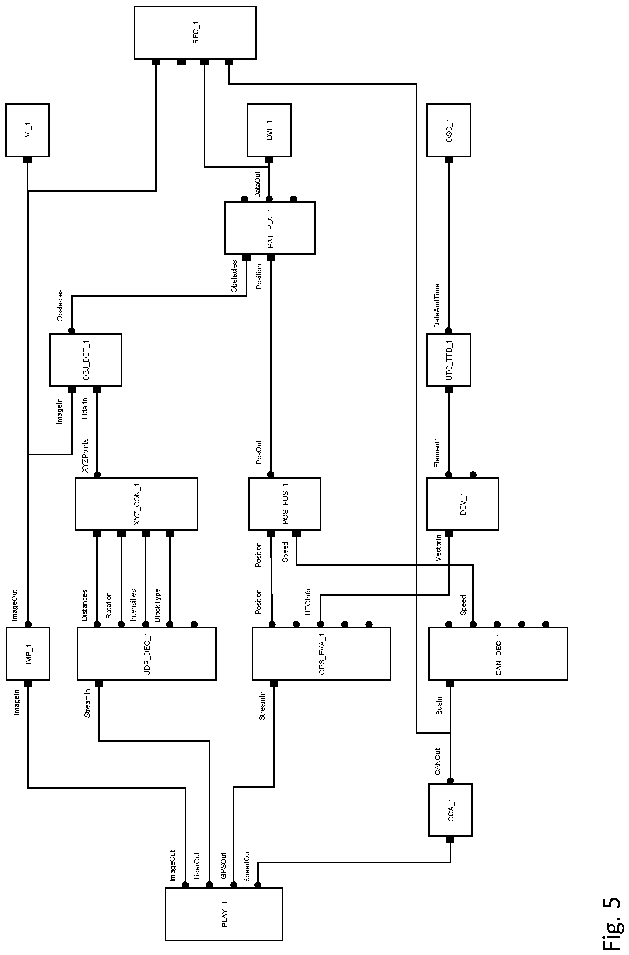

Figur 5 zeigt ein drittes Beispiel eines Blockdiagramms für die Verarbeitung von Sensordaten, bei dem auf der linken Seite eine andere Quelle von Sensordaten dargestellt ist, welches aber weiterhin mehrere Verarbeitungskomponenten umfasst. Wie in Figur 3 umfasst das Blockdiagramm einige Darstellungskomponenten. Auch hier sollen primär die Unterschiede erläutert werden, während die verglichen mit den vorherigen Blockdiagrammen gleichgebliebenen Komponenten nicht weiter beschrieben werden.

In diesem Blockdiagramm ist nur eine einzige Signalquelle vorhanden, und zwar eine Abspielkomponente PLAY_1, welche beispielsweise früher aufgenommen Daten einer Kamera, eines LIDAR-Sensors und/oder weiterer Sensoren wiedergeben bzw. von einem Datenträger abrufen kann. Die Abspielkomponente PLAY_1 weist mehrere Ausgangsports ImageOut, LidarOut, GPSOut und SpeedOut auf, die mit den Eingangsports verschiedener Komponenten verbunden sind. Der Ausgangsport SpeedOut ist darüber hinaus mit einer Konvertierungskomponente CCA_1 verbunden, die beispielsweise das auf dem Datenträger hinterlegte Geschwindigkeitssensorsignal in die von der nachfolgenden Verarbeitungskomponente CAN_DEC_1 benötigte Form bringt.

Ausgehend von dem in Figur 3 dargestellten Blockdiagramm kann das in Listing 2 angegebene Profil für die Anpassung des Blockdiagramms zu dem in Figur 5 dargestellten verwendet werden.

Listing 2:
CAM_1 := PLAY_1;
SOC_1 := 0;
GPS_1 := 0;
CAN_1 := CCA_1;
PLAY_1.ImageOut -> IMP_1. ImageIn;
PLAY_1. LidarOut -> UDP_DEC_1.StreamIn;
PLAY_1.GPSOut -> GPS_EVA_1.StreamIn;
PLAY_1.SpeedOut -> CCA_1.In;

Neben dem Bezeichner ":=" zur Angabe des Austauschs einer Komponente wird hier ein Bezeichner "->" zur Spezifizierung einer Verbindung zwischen zwei Ports verwendet. Prinzipiell können auch andere Bezeichner verwendet werden, bzw. eine Signal- bzw. Port-weise Ersetzung spezifiziert werden.

Das Figur 5 dargestellte Blockdiagramm ist beispielsweise für die Verwendung in Data-Replay-Tests auf einem Host-PC geeignet.

Bei der Entwicklung eines Steuergeräts können verschiedene Anwendungsfälle auftreten, bei denen ein Wechsel zwischen verschiedenen Hardwareplattformen auftritt, so dass eine Signalverarbeitungskette zwischen einem ersten Modus und einem zweiten Modus über ein Ersetzen und/oder Entfernen von Blöcken angepasst werden muss.

In einem ersten Anwendungsfall kann eine Kontrollstrategie auf dem Host-PC entwickelt werden, die anschließend auf einem RCP-System getestet wird. Zweckmäßigerweise wird daher für einen ersten Modus eine Signalverarbeitungskette in einem Blockdiagramm wie in Figur 3 implementiert. Dann kann die Kontrollstrategie mit den am Host-PC angeschlossenen Sensoren entwickelt werden. Sobald die Kontrollstrategie einen gewissen Reifegrad erreicht hat, kann ein Test in einer realistischen Umgebung auf einem RCP-System erfolgen. Für diesen zweiten Modus kann das Blockdiagramm wie in Listing 1 dargestellt angepasst werden.

In einem zweiten Anwendungsfall können die Messdaten zu einer Fahrsituation mittels eines RCP-Systems aufgenommen werden, die anschließend auf einem Host-PC zum Entwickeln und/oder Testen einer neuen Kontrollstrategie wiedergegeben werden. Zweckmäßigerweise wird daher für einen ersten Modus (dieses Anwendungsfalls) eine Signalverarbeitungskette in einem Blockdiagramm wie in Figur 4 implementiert. Hierbei ist zu beachten, dass die punktiert bzw. strichpunktiert dargestellten Komponenten und Signalverbindungen nicht Teil des Blockdiagramms sind. In realen Fahrten können die für einen Test des Kontrollalgorithmus erforderlichen Messdaten aufgenommen werden. Der Test kann dann in einem zweiten Modus mittels eines Blockdiagramms wie in Figur 5 dargestellt auf dem Host-PC erfolgen. Ausgehend vom Blockdiagramm in Figur 4 kann das in Listing 3 angegebene Profil für die Anpassung zu dem in Figur 5 dargestellten Blockdiagramm verwendet werden.

Listing 3:
CAM_1 := PLAY_1;
SOC_1 := 0;
GPS_1 := 0;
CAN_1 := CCA_1;
PLAY_1.ImageOut -> IMP_1. ImageIn;
PLAY_1. LidarOut -> UDP_DEC_1.StreamIn;
PLAY_1.GPSOut -> GPS_EVA_1.StreamIn;
PLAY_1.SpeedOut -> CCA_1.In;
0 := IVI_1;
0 := DVI_1;
0 := DEV_1;
0 := UTC_TTD_1;
0 := OSC_1;
IMP_1.ImageOut -> IVI_1.In;
PAT_PLA_1.DataOut -> DVI_1.In;
GPS_EVA_1.UTCInfo -> DEV_1.VectorIn;
DEV_1.Element1 -> UTC.TTD.In;
UTC_TTD_1.DateAndTime -> OSC_1.In;

Hier wurde das Einfügen einer Komponente als Austausch ":=" einer leeren Komponente "0" formuliert. Prinzipiell können auch andere Schreibweisen verwendet werden.

In einem dritten Anwendungsfall können Parameter einer Komponente mittels des Profils ausgetauscht werden. Beispielsweise kann eine generische Kameratreiberkomponente vorhanden sein, die mit verschiedenen Kameratypen zusammenarbeiten kann. Über das Profil kann dann ein Konfigurationsparameter übergeben bzw. geändert werden, um z.B. von einer per USB angebundenen Kamera (die am Host-PC angeschlossen sein kann) auf eine via CAN-Bus angebundene Kamera (die mit dem RCP-System verbunden sein kann) zu wechseln. Hierfür kann im Profil die Komponente, der Parameter und der neue Wert für einen bestimmten Modus vorgegeben sein.

Mittels des beschriebenen Formalismus kann also ein Blockdiagramm mit mehreren Profilen verwendet werden, um unterschiedliche Anwendungsfälle oder Targetplattformen abzudecken. Muss jetzt beispielsweise aufgrund eines Fehlers von einem RCP-System zurück auf einen Host-PC gewechselt werden, um ein Debugging zu ermöglichen, so kann das Blockdiagramm einfach erneut geladen werden. Ein anschließender Wechsel auf das RCP-System erfordert lediglich ein Laden des Blockdiagramms und Anwenden des entsprechenden Profils. Prinzipiell ist es auch möglich das Ausgangsprofil willkürlich zu wählen. Die Wahl von Anwendungsfall bzw. Targetplattform kann manuell erfolgen oder beispielsweise anhand einer im Profil hinterlegten Hardware-ID automatisiert erfolgen.

Das erfindungsgemäße Verfahren ermöglicht es somit, Multisensorapplikationen mit geringem Aufwand auf verschiedenen Hardwareplattformen auszuführen.

## Patentansprüche

1. Computerimplementiertes Verfahren zum Modifizieren einer Signalverarbeitungskette, welche in einem Blockdiagramm über mit Signallinien verbundene Komponenten implementiert ist, wobei das Blockdiagramm mindestens eine Signalquelle und mindestens zwei Komponenten umfasst, die direkt oder über zwischengeschaltete Komponenten mit mindestens einer der Signalquellen verbunden sind, das Verfahren umfassend
Einlesen des Blockdiagramms in einer Entwicklungsumgebung, Auswahl eines Modus aus zumindest zwei vorhandenen Modi, wobei in einem ersten Modus die Signalverarbeitung auf einer ersten Hardwareplattform erfolgt, insbesondere einem Host-PC, und in einem zweiten Modus die Signalverarbeitung auf einer zweiten Hardwareplattform erfolgt, insbesondere einem RCP-System, wobei die erste Hardwareplattform und die zweite Hardwareplattform unterschiedlich ausgestaltet sind, und
Entfernen oder Ersetzen mindestens einer ersten Komponente aus dem Blockdiagramm, wenn der zweite Modus gewählt wurde.

2. Verfahren nach Anspruch 1, ferner umfassend das Entfernen mindestens einer weiteren Komponente, wenn die erste Komponente entfernt wurde und die weitere Komponente ausgangsseitig ausschließlich mit der ersten Komponente verbunden war.

3. Verfahren nach einem der vorhergehenden Ansprüche, wobei die Auswahl eines Modus automatisch anhand einer Hardwareplattform erfolgt, welche eine Laufzeitumgebung der Entwicklungsumgebung ausführt.

4. Verfahren nach einem der vorhergehenden Ansprüche, wobei ein dritter Modus über die Entwicklungsumgebung ausgewählt werden kann, und wobei der dritte Modus eine Ausführung auf einer dritten Hardwareplattform, insbesondere einem Seriensteuergerät, umfasst, **dadurch gekennzeichnet, dass** im dritten Modus zusätzlich eine Erzeugung von Quellcode aus dem Blockdiagramm erfolgt.

5. Verfahren nach einem der vorhergehenden Ansprüche, umfassend ein Einlesen einer Konfigurationsdatei, welche zumindest eine Abbildung einer Komponente des Blockdiagramms auf eine andere Komponente oder eine Abbildung auf leere Komponente, d.h. ein Entfernen der Komponente, umfasst, wobei die zumindest eine Abbildung spezifisch für einen Modus ist.

6. Verfahren nach einem der vorhergehenden Ansprüche, wobei die Entwicklungsumgebung eine Laufzeitumgebung umfasst, welche dazu eingerichtet ist, über eine Signalquelle empfangene Signaldaten mit mindestens einem Zeitstempel zu versehen, und wobei die Komponenten und/oder die Laufzeitumgebung dazu eingerichtet sind, Signaldaten synchronisiert zu verarbeiten.

7. Verfahren zum Testen eines Steuergeräts mit den Schritten Öffnen eines Blockdiagramms auf einer ersten Hardwareplattform, insbesondere einem Host-PC, wobei in dem Blockdiagramm zumindest eine erste Signalquelle als Abspielkomponente ausgeführt ist,
Ausführen des Blockdiagramms auf der ersten Hardwareplattform, um mindestens ein erstes Ergebnis zu erhalten,
Vergleichen des ersten Ergebnisses mit einer Testbedingung, und wenn die erste Testbedingung erfüllt ist,
Auslesen einer Konfigurationsdatei, welche eine Abbildung der ersten Signalquelle auf eine Komponente zum Ansteuern eines realen Sensors umfasst,
Anpassen des Blockdiagramms anhand der Konfigurationsdatei, wobei das Anpassen des Blockdiagramms das Ersetzen der Abspielkomponente durch die Komponente zum Ansteuern eines realen Sensors umfasst, Herunterladen des modifizierten Blockdiagramms auf eine zweite Hardwareplattform, insbesondere ein RCP-System,
Ausführen des Blockdiagramms auf der zweiten Hardwareplattform, um ein Ergebnis basierend auf realen Sensordaten zu erhalten.

8. Verfahren zum Konfigurieren eines Steuergeräts, wobei das Steuergerät mindestens eine Recheneinheit umfasst und vorzugsweise mindestens einen Sensor und/oder mindestens einen Aktor aufweist, um Daten eines physikalischen Prozesses zu erfassen und/oder auf diesen einzuwirken, das Verfahren umfassend die Schritte
a. Erzeugen eines Quellcodes mit einem Verfahren nach Anspruch 4,
b. Kompilieren des Quellcodes für die Recheneinheit, so dass ein ausführbarer Code erzeugt wird,
c. Übertragen des ausführbaren Codes auf das Steuergerät, und
d. Hinterlegen des ausführbaren Codes auf einem nichtflüchtigen Speicher des Steuergeräts und/oder Ausführen des ausführbaren Codes durch die Recheneinheit des Steuergeräts.

9. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der vorhergehenden Ansprüche auszuführen.

10. Computersystem umfassend eine Mensch-Maschine-Schnittstelle, einen nichtflüchtigen Speicher und einen Prozessor, wobei der Prozessor dazu eingerichtet ist, ein Verfahren nach einem der vorhergehenden Ansprüche auszuführen.
